# FASCICULE DE BREVET EUROPEEN

(11) **EP 2 883 585 B1**
(45) Date de publication et mention de la délivrance du brevet: **14.03.2018**
(21) Numéro de dépôt: 14193972.8
(22) Date de dépôt: 20.11.2014
(51) Int. Cl.: A63F 13/22, A63F 13/235, A63F 13/26, A63F 13/422, A63F 13/87, H04M 1/733, G06F 3/033

(54) **Dispositif de jeu vidéo**
Videospiel-Vorrichtung
Video game device

(30) Priorité: 20.11.2013 FR 1361391
(43) Date de publication de la demande: 17.06.2015
(73) Titulaire: Bigben Interactive SA, 59814 Lesquin Cedex (FR)
(72) Inventeur: Falc, Alain, 8500 Kortrijk (BE); Allaert, Yannick, 62410 Meurchin (FR); Liddle, Mark, Bracknell Berkshire, RG42 4BZ (GB); Tiley, Andrew, Southampton Hampshire, SO16 8AY (GB)
(74) Mandataire: Poindron, Cyrille

(56) Documents cités:
- EP-A2- 1 736 847
- WO-A1-2013/053043
- US-A1- 2010 081 375
- US-A1- 2011 242 361
- Logitech: "Harmony Ultimate - User Guide", , 31 octobre 2013 (2013-10-31), XP055141467, Extrait de l'Internet: URL:http://cdn-www.myharmony.com/files/har monyultimate-usermanual-en.pdf [extrait le 2014-09-19]
- Logitech: "Harmony Smart Control - User Guide", , 31 octobre 2013 (2013-10-31), XP055141465, Extrait de l'Internet: URL:http://www.logitech.com/assets/50381/h armony-smart-control-user-guide.pdf [extrait le 2014-09-19]
- Anonymous: "Alt Game Controls - Southpaw/Legacy Support in Console Games - Controller Configuration Definitions", , 28 juillet 2013 (2013-07-28), XP055181683, Extrait de l'Internet: URL:https://web.archive.org/web/2013072811 4752/http://altgamecontrols.com/definition s.php [extrait le 2015-04-08]
- Anonymous: "Alt Game Controls - Southpaw/Legacy Support in Console Games - Playstation 3 Game Controller Options", , 28 juillet 2013 (2013-07-28), XP055181690, Extrait de l'Internet: URL:https://web.archive.org/web/2013072811 1158/http://altgamecontrols.com/ps3games.p hp [extrait le 2015-04-08]
- Anonymous: "List of messaging applications for Nintendo game consoles - Wikipedia, the free encyclopedia", , 10 novembre 2013 (2013-11-10), XP055206849, Extrait de l'Internet: URL:https://en.wikipedia.org/w/index.php?t itle=List_of_messaging_applications_for_Ni ntendo_game_consoles&oldid=581108878#Wii_U _Chat [extrait le 2015-08-07]

## Description

La présente invention concerne de manière générale un contrôleur de jeu agencé pour être actionné par un utilisateur et envoyer des signaux vers une unité de calcul de jeu.

Il est connu dans l'art antérieur des contrôleurs de jeu munis de nombreuses touches, tel que celui décrit dans le document US2013215024. En contrepartie, ce système présente notamment l'inconvénient de présenter une cartographie des touches préétablies, ce qui peut ne pas convenir à tous les utilisateurs.

De plus, le document EP1736847A2 décrit une station d'accueil de jeu mobile universelle et commande.

La société Logitech a commercialisé en 2013 une télécommande dite "Harmony" dont certaines touches peuvent être configurées.

Il est enfin connu de proposer des contrôleurs de jeu qui peuvent être mis en configuration "gaucher" et 'droitier", Voir l'adresse :
https://web.archive.org/web/20130728114752/http://altgamecontrols.co m/definitions.php
https://web.archive.org/web/20130728111158/http://altgamecontrols.co m/ps3games.php

Un but de la présente invention est de répondre aux inconvénients du document de l'art antérieur mentionné ci-dessus et en particulier, tout d'abord, de proposer un procédé de configuration pour contrôleur de jeu dont l'utilisation peut être alors être adaptée à chaque utilisateur.

L'invention est définie par les revendications annexées. Pour cela un premier aspect concerne un procédé d'utilisation d'un contrôleur de jeu, comprenant :
- une phase de configuration d'un contrôleur de jeu avec un appareil électronique portable, notamment un téléphone portable, le contrôleur de jeu comprenant au moins une touche agencée pour être actionnée par un utilisateur, la phase de configuration comprenant les étapes consistant à :
   - programmer, sur l'appareil électronique portable, une fonction à exécuter lors de l'actionnement de ladite au moins une touche,
   - définir, avec l'appareil électronique portable, un signal à envoyer à une unité de calcul de jeu distincte de l'appareil électronique portable et du contrôleur de jeu, correspondant à la fonction programmée,
   - envoyer, avec l'appareil électronique portable, au contrôleur de jeu le signal défini,
   - associer, dans le contrôleur de jeu, l'actionnement de ladite au moins une touche avec le signal défini,
- une phase d'utilisation, mise en oeuvre avec un téléphone portable, avec une étape consistant à envoyer à l'unité de calcul de jeu le signal défini lorsque la dite au moins une touche est actionnée,
et comprenant :
- une étape consistant à faire suivre au contrôleur de jeu un message destiné au téléphone portable, et
- une étape consistant à afficher le message sur un afficheur du contrôleur de jeu.

Le procédé selon la présente invention permet d'effectuer la configuration du contrôleur de jeu avec un téléphone portable, dont l'interface homme machine est plus élaborée que celle d'un contrôleur de jeu classique. Très avantageusement, le téléphone portable comprend un écran d'affichage tactile, ce qui rend les manipulations extrêmement aisées. Une fois la programmation de la fonction effectuée, il suffit d'envoyer au contrôleur de jeu la définition du signal à émettre lors de l'actionnement de la touche choisie et ce dernier l'associe à la touche considérée, pour tous les actionnements ultérieurs. On peut envisager d'ajouter une touche particulière sur le contrôleur de jeu qui sera configurable à loisir (c'est à dire une touche dédiée, supplémentaire aux touches de fonctions standards), ou alors on peut envisager de reconfigurer une touche standard pour lui assigner une autre fonction que celle prévue au départ.

Selon cette mise en oeuvre, le signal défini est envoyé, et il ne correspond pas à un signal standard.

Le contrôleur de jeu permet d'afficher des messages de type "Short Message Service" ou SMS, ce qui augmente l'immersion du joueur, ou lui permet de lire ces messages sans perdre de temps.

Un grand avantage du procédé selon l'invention est de permettre une personnalisation de l'utilisation du contrôleur de jeu, sans passer par la console de jeu (l'unité de calcul de jeu qui peut être une console de salon), ni par le programme de jeu : cette solution est complètement indépendante et ne requiert aucune modification/intervention sur la console ou le programme qui ne sont généralement protégés contre les modifications.

L'étape d'envoi du signal défini au contrôleur de jeu avec l'appareil électronique portable peut comprendre une étape consistant à identifier avec l'appareil électronique portable des caractéristiques essentielles du signal défini, et une étape consistant à envoyer les caractéristiques essentielles au contrôleur de jeu. En d'autres termes, seuls les paramètres du signal défini sont envoyés au contrôleur de jeu, et ce sont ces paramètres qui sont stockés dans le contrôleur de jeu. Cela permet au contrôleur de jeu, lors de l'actionnement de ladite au moins une touche, de reproduire le signal défini et de l'envoyer à l'unité de calcul de jeu.

Avantageusement, le contrôleur comprend deux touches chacune agencée pour envoyer un signal prédéterminé à l'unité de calcul de jeu, et l'étape de programmation étant une étape consistant à échanger les signaux à envoyer entre les deux touches. On peut rendre la manette plus pratique à utiliser pour un gaucher ou un droitier par exemple. La manette devient ambidextre et la mise en configuration par l'appareil électronique portable permet de simplifier le contrôleur lui même.

Avantageusement, l'unité de calcul est intégrée dans une console de jeux de salon.

Avantageusement, l'étape de définition avec l'appareil électronique portable, du signal à envoyer à une unité de calcul de jeu, correspondant à la fonction programmée, comprend une étape qui consiste à prendre en compte un jeu particulier. Autrement dit, le signal défini sera adapté à un jeu particulier, ce qui permet de répondre à des spécificités du jeu considéré, ou de créer des actions particulières pour ce jeu, ou encore même des caractéristiques particulières. On peut envisager par exemple de créer une arme inédite pour un jeu de tir.

Avantageusement, le procédé est mis en oeuvre avec un téléphone portable ou une tablette tactile. Ces appareils se prêtent bien à recevoir des applications de programmes de configuration, et sont aisés à utiliser, avec leurs écrans tactiles.

Avantageusement, l'étape de programmation est une étape consistant à associer au moins deux fonctions de jeu différentes entre elles. De cette manière, en actionnant une seule touche, le contrôleur de jeu émettra un signal correspondant à la séquence désirée, ce qui évite d'actionner une pluralité de touches. Par exemple, on peut combiner dans un jeu de tir les fonctions consistant à s'agenouiller, épauler et tirer, en actionnant un seul bouton.

Avantageusement, l'étape de programmation est une étape consistant à définir une fonction d'actionnement de touche accéléré. Selon cette mise en oeuvre, il suffit d'actionner une fois la touche considérée, pour que le contrôleur envoie vers l'unité de calcul de jeu un certain nombre de signaux identiques répétés à une fréquence donnée, comme si l'utilisateur avait actionné plusieurs fois la même touche. Par exemple, on peut utiliser cette fonctionnalité pour lancer une série de plusieurs tirs rapides, en actionnant une seule touche.

Avantageusement, l'étape de configuration est une étape consistant à définir une sensibilité de ladite au moins une touche. Cette mise en oeuvre est intéressante pour les situations où il faut viser un objectif par exemple, alors il suffit de réduire la sensibilité des touches de déplacement, pour ajuster lentement une mire sur l'objectif.

Avantageusement, le procédé d'utilisation comprend les étapes consistant à :
- envoyer au contrôleur de jeu un signal d'un appel envoyé au téléphone portable, et
- prendre l'appel depuis le contrôleur de jeu,
- dévier la conversation depuis le téléphone portable vers un casque audio porté par l'utilisateur. Cette mise en oeuvre augmente l'immersion car l'utilisateur n'a plus besoin de se saisir de son téléphone pour prendre un appel.

Avantageusement, l'appareil électronique portable établit une communication sans fil avec le contrôleur de jeu pour envoyer le signal défini. On peut envisager d'utiliser une communication sans fil en suivant un protocole particulier.

Un dernier aspect de l'invention concerne un dispositif de jeu vidéo comprenant :
- un appareil électronique portable, notamment un téléphone portable, avec des moyens de communication,
- au moins un contrôleur de jeu, comprenant au moins une touche de commande agencée pour être actionnée par un utilisateur, des moyens de génération d'un signal lorsque ladite au moins une touche est actionnée; des moyens de communications agencés pour envoyer le signal à une unité de calcul de jeu,
- une unité de calcul de jeu agencée pour recevoir le signal envoyé par le contrôleur de jeu,
caractérisé en ce que :
- l'appareil électronique portable comprend des moyens de calcul agencés pour permettre de programmer une fonction à exécuter lors de l'actionnement de ladite au moins une touche, et pour définir un signal correspondant à la fonction programmée, les moyens de communication de l'appareil électronique portable étant agencés pour envoyer le signal défini vers le contrôleur de jeu,
- le contrôleur de jeu comprend : des moyens de communication avec l'appareil électronique portable agencés pour recevoir le signal défini envoyé par le téléphone, et une unité numérique agencée pour associer l'actionnement de ladite au moins une touche avec le signal défini.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un système de jeu utilisant un contrôleur de jeu ;
- la figure 2 représente un téléphone portable avec lequel un utilisateur peut configurer le contrôleur de jeu ;
- la figure 3 représente le téléphone portable de la figure 1 en train d'envoyer au contrôleur de jeu la configuration effectuée.

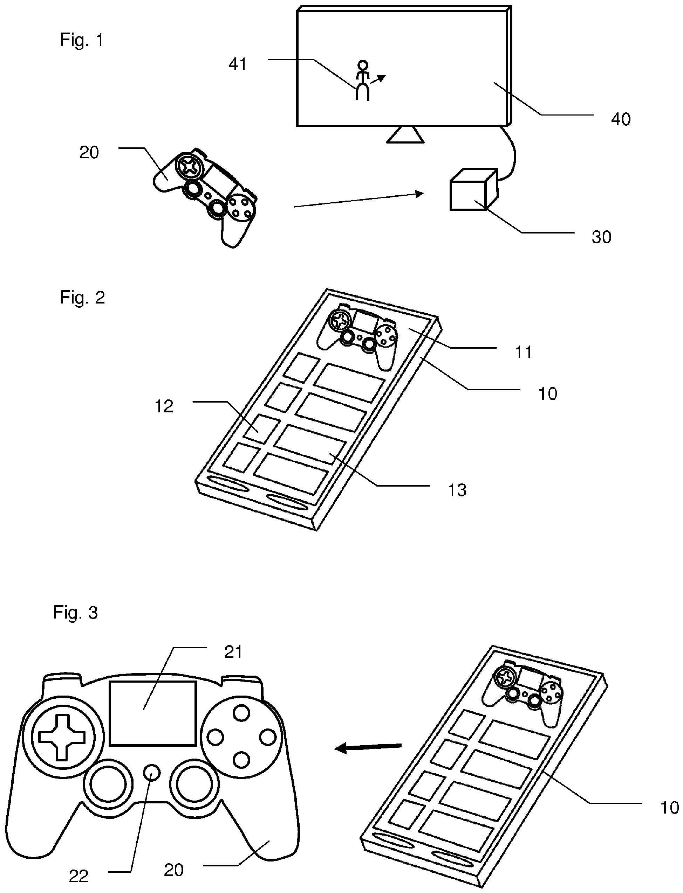

La figure 1 représente un système de jeu comprenant une console de jeu 30, reliée à un écran d'affichage 40 et à un contrôleur de jeu 20. La console de jeu 30 comprend au moins une unité de calcul de jeu et une unité de stockage de données numériques qui lui permettent de stocker et exécuter un programme de jeu vidéo. Le contrôleur de jeu 20 permet à un utilisateur de commander par exemple des actions d'un personnage virtuel 41, en actionnant des touches du contrôleur de jeu. A chaque actionnement, le contrôleur de jeu envoi un signal particulier à l'unité de calcul de jeu qui provoquera en réponse un mouvement ou une action du personnage virtuel 41. Pour faciliter l'utilisation du contrôleur de jeu 20, l'invention propose de permettre de changer la configuration des touches du contrôleur de jeu 20.

La figure 2 représente un téléphone portable 10 comprenant un écran tactile 11. Afin d'effectuer la configuration d'un contrôleur de jeu, un programme informatique ou application a été téléchargée au préalable dans des moyens de mémoire du téléphone portable 10. Ce programme, en étant exécuté, provoque l'affichage sur l'écran 11 d'une représentation simplifiée du contrôleur de jeu à configurer, ainsi que des icones 12, et des fenêtres de réglage 13 associées.

Dans un premier exemple de réalisation, les icones 12 représentent des touches prédéfinies du contrôleur de jeu (qui peuvent être liées entre elles par des numéros par exemple), et les fenêtres de réglage 13 permettent de choisir une fonction parmi une liste (qui peut être déroulante par exemple). La fonction choisie sera ensuite associée à la touche considérée à la suite d'une validation faite par l'utilisateur. Une fois la validation effectuée, le programme va définir un signal que le contrôleur devra envoyer à l'unité de calcul de jeu. En particulier, il peut être possible de dédier une touche particulière à une fonction de saut du personnage virtuel 41. Les fonctions étant proposées dans un menu déroulant, l'utilisateur peut en fait choisir n'importe laquelle. On peut envisager de proposer à l'utilisateur les fonctions suivantes : saut, course, marche arrière, tout dépend du jeu considéré et de son contexte.

Dans un deuxième exemple de réalisation, les icones 12 représentent des boutons définis avec leur fonction associées par défaut, et les fenêtres de réglage 13 représentent un réglage de l'intensité de la fonction. Par exemple, une icône peut représenter le bouton associé à la course, et la fenêtre de réglage 13 associée va permettre de régler la vitesse de course par exemple. On peut également envisager qu'une icône représente un bouton de tir et la fenêtre associée va permettre de régler la vitesse de tir. Enfin, la touche peut être une touche de déplacement, et la configuration peut consister à ralentir le déplacement, pour permettre une visée plus précise.

Dans un troisième mode de réalisation, les icones 12 peuvent représenter une touche particulière du contrôleur de jeu 20, et la fenêtre de réglage 13 va permettre d'associer plusieurs fonctions à associer ensemble, ou à combiner. Ainsi, on peut envisager d'associer une fonction de mise en position agenouillée d'un tireur avec une fonction de tir. L'utilisateur, avec cette configuration pourra, en actionnant une seule touche, faire exécuter les deux actions à la suite l'une de l'autre.

Une fois la fonction programmée, le programme exécuté par le téléphone portable 10 va définir un signal correspondant à cette fonction, que le contrôleur 20 devra envoyer à l'unité de calcul de jeu, lorsque la touche considérée est actionnée.

Bien entendu, il est possible de configurer certaines touches suivant le premier mode de réalisation (définir une fonction pour une touche), certaines selon le deuxième mode de réalisation (réglage de l'intensité ou de la sensibilité), et certaines autres selon le troisième mode de réalisation (combinaison de fonctions), sur le même contrôleur de jeu 20.

La figure 3 représente le téléphone portable 10 qui envoie au contrôleur de jeu 20 le signal défini, afin que le contrôleur de jeu 20 l'associe à la touche configurée par l'utilisateur. Selon cette mise en oeuvre, on comprend que plusieurs avantages apparaissent, notamment le fait de pouvoir configurer le contrôleur de jeu 20 sur le téléphone portable 10, c'est-à-dire sans manipuler le contrôleur de jeu 20, et sans sa présence nécessairement. De plus, l'envoi de la configuration au contrôleur de jeu 20 par le téléphone portable 10 ne se fait pas par l'intermédiaire de la console de jeu 30, c'est-à-dire que le système selon la présente invention ne nécessite pas de modification sur la console de jeu 30, ni au niveau du programme de jeu vidéo, qui restent tous deux standards.

Il est également possible de stocker les configurations dans le téléphone portable 10, sous forme de profils ou de comptes utilisateurs, pour pouvoir stocker une configuration particulière pour un jeu donné ou un utilisateur donné.

Dans le cas de l'envoi de la configuration effectuée au contrôleur de jeu 20, la communication entre le téléphone portable 10 et le contrôleur de jeu 20 est brève, mais on peut envisager également d'avoir une communication établie en continue, afin de pouvoir envoyer ou transférer au contrôleur de jeu 20 des messages reçus sur le téléphone portable 10, pour les afficher sur un écran 21 du contrôleur de jeu 20. Cet écran 21 peut être tactile pour composer et envoyer une réponse directement depuis le contrôleur de jeu 20.

On peut également envisager d'implanter un bouton 22 qui permet de prendre un appel téléphonique reçu sur le téléphone portable 10 pour dévier directement depuis le contrôleur de jeu 20 la conversation sur un casque audio porté par l'utilisateur.

Une dernière mise en oeuvre consiste à implanter un bouton sur le contrôleur de jeu 20 qui, lorsqu'il est actionné envoie au téléphone portable 10 un signal de commande pour le faire sonner, afin que l'utilisateur retrouve aisément son téléphone portable 10.

La communication entre le contrôleur de jeu 20 et le téléphone portable 10 peut se faire selon une liaison sans fil, en suivant un protocole bien connu de l'homme du métier, Bluetooth ou Wifi par exemple.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Procédé d'utilisation d'un contrôleur de jeu (20), comprenant :
- une phase de configuration d'un contrôleur de jeu (20) avec un téléphone portable (10), le contrôleur de jeu (20) comprenant au moins une touche agencée pour être actionnée par un utilisateur, la phase de configuration comprenant les étapes consistant à :
- programmer, sur le téléphone portable, une fonction à exécuter lors de l'actionnement de ladite au moins une touche,
- définir, avec le téléphone portable, un signal à envoyer à une unité de calcul de jeu distincte du téléphone portable et du contrôleur de jeu, correspondant à la fonction programmée,
- envoyer, avec le téléphone portable, au contrôleur de jeu (20) le signal défini,
- associer, dans le contrôleur de jeu (20), l'actionnement de ladite au moins une touche avec le signal défini,
- une phase d'utilisation comprenant une étape consistant à envoyer à l'unité de calcul de jeu le signal défini lorsque la dite au moins une touche est actionnée,
et comprenant :
- une étape, mise en oeuvre avec le téléphone portable (10) consistant à faire suivre au contrôleur de jeu (20) un message destiné au téléphone portable (10), et
- une étape consistant à afficher le message sur un afficheur (21) du contrôleur de jeu (20).

2. Procédé d'utilisation d'un contrôleur de jeu (20) selon la revendication précédente, dans lequel l'étape de programmation comprend une étape consistant à associer au moins deux fonctions de jeu différentes entre elles.

3. Procédé d'utilisation d'un contrôleur de jeu (20) selon la revendication 1, dans lequel l'étape de programmation comprend une étape consistant à définir une fonction d'actionnement de touche accéléré.

4. Procédé d'utilisation d'un contrôleur de jeu (20) selon la revendication 1, dans lequel l'étape de programmation comprend une étape consistant à définir une sensibilité de ladite au moins une touche.

5. Procédé d'utilisation d'un contrôleur de jeu (20) selon l'une des revendications précédentes dans lequel la phase d'utilisation comprend les étapes consistant à :
- envoyer au contrôleur de jeu (20) un signal d'un appel envoyé au téléphone portable (10), et
- prendre l'appel depuis le contrôleur de jeu (20),
- dévier la conversation depuis le téléphone portable (10) vers un casque audio porté par l'utilisateur.

6. Procédé selon l'une des revendications précédentes, dans lequel le téléphone portable établit une communication sans fil avec le contrôleur de jeu (20) pour envoyer le signal défini.

## Patentansprüche

1. Verfahren zur Benutzung eines Game-Controllers (20), das Folgendes umfasst:
- eine Konfigurationsphase eines Game-Controllers (20) mit einem Mobiltelefon (10), wobei der Game-Controller (20) zumindest eine Taste umfasst, die so gestaltet ist, dass sie von einem Benutzer betätigt werden kann, wobei die Konfigurationsphase die folgenden Schritte umfasst:
- Programmieren einer Funktion auf dem Mobiltelefon, die ausgeführt werden soll, wenn zumindest die eine Taste betätigt wird,
- Definieren eines Signals mit dem Mobiltelefon, das an eine Spielrecheneinheit gesendet werden soll, die vom Mobiltelefon und dem Game-Controller getrennt ist, und das der programmierten Funktion entspricht,
- Senden des definierten Signals mit dem Mobiltelefon an den Game-Controller (20),
- Zuordnen der Betätigung der zumindest einen Taste zum definierten Signal im Game-Controller (20),
- eine Benutzungsphase, die einen Schritt mit Senden des definierten Signals an die Spielrecheneinheit umfasst, wenn die zumindest eine Taste betätigt wird,
und die Folgendes umfasst:
- einen Schritt, der mit dem Mobiltelefon (10) durchgeführt wird, wobei eine für das Mobiltelefon (10) bestimmte Nachricht an den Game-Controller (20) weitergeleitet wird, und
- einen Schritt, wobei die Nachricht auf einem Display (21) des Game-Controllers (20) angezeigt wird.

2. Verfahren zur Benutzung eines Game-Controllers (20) nach dem vorstehenden Anspruch, wobei der Programmierschritt einen Schritt umfasst, wobei zumindest zwei untereinander verschiedene Spielfunktionen einander zugeordnet werden.

3. Verfahren zur Benutzung eines Game-Controllers (20) nach Anspruch 1, wobei der Programmierschritt einen Schritt umfasst, wobei eine Funktion der beschleunigten Tastenbetätigung definiert wird.

4. Verfahren zur Benutzung eines Game-Controllers (20) nach Anspruch 1, wobei der Programmierschritt einen Schritt umfasst, wobei eine Empfindlichkeit der zumindest einen Taste definiert wird.

5. Verfahren zur Benutzung eines Game-Controllers (20) nach einem der vorstehenden Ansprüche, wobei die Benutzungsphase folgende Schritte umfasst:
- Senden eines Signals eines an das Mobiltelefon (10) geschickten Anrufs an den Game-Controller (20), und
- Entgegennehmen des Anrufs vom Gamecontroller (20),
- Umlegen des Gesprächs vom Mobiltelefon (10) auf ein vom Benutzer getragenes Headset.

6. Verfahren nach einem der vorstehenden Ansprüche, wobei das Mobiltelefon eine drahtlose Verbindung mit dem Game-Controller (20) herstellt, um das definierte Signal zu senden.

## Claims

1. A method for using a game controller (20) comprising:
- a configuration phase of a game controller (20) with a portable telephone (10), the game controller (20) comprising at least one key arranged to be actuated by a user, the configuration phase comprising the steps consisting of:
- programming, on the portable telephone, a function to be executed during the actuation of said at least one key,
- defining, with the portable telephone, a signal to be sent to a game calculation unit distinct from the portable telephone and from the game controller, corresponding to the programmed function,
- sending, with the portable telephone, the defined signal to the game controller (20),
- associating, in the game controller (20), the actuation of said at least one key with the defined signal,
- a use phase comprising a step consisting of sending to the game calculation unit the signal defined when said at least one key is actuated,
and comprising:
- a step, implemented with the portable telephone (10) consisting of forwarding to the game controller (20) a message intended for the portable telephone (10), and
- a step consisting of displaying the message on a display device (21) of the game controller (20).

2. The method for using a game controller (20) according to the preceding claim, wherein the programming step comprises a step consisting of associating at least two different game functions together.

3. The method for using a game controller (20) according to claim 1, wherein the programming step comprises a step consisting of defining an accelerated key actuation function.

4. The method for using a game controller (20) according to claim 1, wherein the programming step comprises a step consisting of defining a sensitivity of said at least one key.

5. The method for using a game controller (20) according to one of the preceding claims, wherein the use phase comprises the steps consisting of:
- sending to the game controller (20) a signal of a call sent to the portable telephone (10), and
- receiving the call from the game controller (20),
- diverting the conversation from the portable telephone (10) to an audio headset worn by the user.

6. The method according to one of the preceding claims, wherein the portable telephone establishes wireless communication with the game controller (20) to send the defined signal.
